# EUROPEAN PATENT APPLICATION

(11) **EP 4 769 059 A1**
(43) Date of publication of application: **01.07.2026**
(21) Application number: 24867119.0
(22) Date of filing: 01.08.2024
(51) Int. Cl.: G05F 1/56

(54) **VOLTAGE REGULATOR CIRCUIT, ELECTRONIC DEVICE, AND VOLTAGE REGULATION METHOD**

(30) Priority: 19.09.2023 CN 202311224545
(71) Applicant: Honor Device Co., Ltd., Shenzhen, Guangdong 518040 (CN)
(72) Inventor: DUAN, Yangsen, Shenzhen, Guangdong 518040 (CN); AN, Qi, Shenzhen, Guangdong 518040 (CN); ZHANG, Youjun, Shenzhen, Guangdong 518040 (CN); YU, Huanhuan, Shenzhen, Guangdong 518040 (CN); MA, Chengyu, Shenzhen, Guangdong 518040 (CN); LIU, Sijia, Shenzhen, Guangdong 518040 (CN)
(74) Representative: Goddar, Heinz J.
(86) International application number: PCT/CN2024/109154
(87) International publication number: WO 2025/060702

(57) **Abstract**

This application discloses a voltage regulator circuit, an electronic device, and a voltage regulating method. When a next-stage load of a VRM is working, a logic high level is input into a SYNC pin of an SPS/DrMOS, so that the SPS/DrMOS works normally. When the next-stage load of the VRM is not working, the SYNC pin of the SPS/DrMOS is set to an intermediate state, so that the SPS/DrMOS enters a standby mode. In this way, a quiescent current on a VCC pin is reduced, and additional power consumption on the VCC pin of the SPS/DrMOS is reduced.

## Description

This application claims priority to Chinese Patent Application No. 202311224545.6, entitled "VOLTAGE REGULATOR CIRCUIT, ELECTRONIC DEVICE, AND VOLTAGE REGULATING METHOD" filed with the China National Intellectual Property Administration on September 19, 2023, which is incorporated herein by reference in its entirety.

### TECHNICAL FIELD

This application relates to the field of electronic circuits, and in particular, to a voltage regulator circuit, an electronic device, and a voltage regulating method.

### BACKGROUND

Load requirement voltages, draw currents, and the like of some modules such as a central processing unit (central processor unit, CPU), a graphics processing unit (graphics processing unit, GPU), and an application specific integrated circuit (application specific integrated circuit, ASIC) in an electronic device are dynamically changing. For example, a load voltage and a current of the CPU vary significantly between opening a document and launching a game. Therefore, core voltages Vcore required by the foregoing modules are different, and may increase or decrease instantaneously, and a device power supply that outputs a fixed voltage cannot meet voltage requirements of the foregoing modules. Therefore, a voltage regulator module (voltage regulator module, VRM) is disposed in the electronic device, and is configured to convert a relatively large direct-current voltage (for example, 12 V) output by a power supply into a stable smaller direct-current voltage (for example, 0.5 V - 2 V), and adjust magnitude of an output voltage in real time based on a load requirement, to meet working voltage requirements of the foregoing modules.

### SUMMARY

This application provides a voltage regulator circuit, an electronic device, and a voltage regulating method, to reduce additional power consumption of the electronic device.

According to a first aspect, a voltage regulator circuit is provided, including: a pulse-width modulation PWM controller and N first circuits, where N is a positive integer. The first circuit includes a unidirectional conduction apparatus and a second circuit. The PWM controller is configured to output a PWM voltage signal to the second circuit, and the second circuit is configured to: reduce, based on the PWM voltage signal, a voltage received by a high-voltage input terminal of the voltage regulator circuit, and output the reduced voltage. The PWM controller includes an EN pin, and the EN pin of the PWM controller is connected to an input terminal of an enable signal of the PWM controller. The second circuit includes a DrMOS. The DrMOS includes a SYNC pin and a VCC pin, the VCC pin is connected to an input terminal of a drive voltage of the DrMOS, and the SYNC pin is not connected to the input terminal of the drive voltage of the DrMOS. A first terminal of a pull-up resistor module is connected to the VCC pin, and a second terminal is connected to the SYNC pin. A first terminal of a pull-down resistor module is connected to the SYNC pin, and a second terminal is grounded. The pull-up resistor module includes a first resistor and/or a third resistor, and the pull-down resistor module includes a second resistor and/or a fourth resistor. Both a first terminal of the first resistor and a first terminal of the third resistor are connected to the VCC pin, and both a second terminal of the first resistor and a second terminal of the third resistor are connected to the SYNC pin. Both a first terminal of the second resistor and a first terminal of the fourth resistor are connected to the SYNC pin, and both a second terminal of the second resistor and a second terminal of the fourth resistor are grounded. The first resistor and the second resistor belong to the voltage regulator circuit and are located on a periphery of the PWM controller and the second circuit. The third resistor and the fourth resistor belong to the DrMOS. A first terminal of the unidirectional conduction apparatus is connected to the EN pin of the PWM controller, and a second terminal is connected to the SYNC pin.

During implementation of the voltage regulator circuit in the first aspect, the SYNC pin is not connected to the input terminal of the drive voltage of the DrMOS, but is connected to the VCC by using the pull-up resistor module and is grounded by using the pull-down resistor module. In this way, voltages on the SYNC pin in a working process and a non-working process of the voltage regulator circuit can be adjusted, and the SYNC pin is prevented from continuously receiving the drive voltage.

With reference to the first aspect, in some implementations, a quiescent current existing on the VCC pin when the SYNC pin is at an intermediate-state level is less than a quiescent current existing on the VCC pin when the SYNC pin is at a logic high level; when the EN pin of the PWM controller receives a logic high level, the unidirectional conduction apparatus is turned on from the first terminal to the second terminal, and the SYNC pin receives a high level; and when the EN pin of the PWM controller receives a logic low level, the unidirectional conduction apparatus is cut off from the first terminal to the second terminal, and the SYNC pin receives an intermediate-state level.

In the previous implementation, when the PWM controller is working, a logic high level is input into the SYNC pin, so that the DrMOS works normally; and when the PWM controller is not working, the SYNC pin is set to an intermediate state, to reduce the quiescent current on the VCC pin, that is, to reduce additional power consumption on the VCC pin.

With reference to the first aspect, in some implementations, the voltage regulator circuit further includes a first capacitor, a first terminal of the first capacitor is connected to the SYNC pin, and a second terminal of the first capacitor is grounded. The first capacitor may be configured to adjust a timing sequence at which the SYNC pin enters the intermediate-state level from the logic high level, so that the SYNC pin is powered off more slowly than the EN pin, thereby avoiding an under-voltage fault of the PWM controller.

With reference to the first aspect, in some implementations, the first capacitor is located on the periphery of the PWM controller and the second circuit.

With reference to the first aspect, in some implementations, when a voltage difference from the first terminal to the second terminal of the unidirectional conduction apparatus is greater than an on-voltage drop of the unidirectional conduction apparatus, the unidirectional conduction apparatus is turned on from the first terminal to the second terminal, or otherwise, the unidirectional conduction apparatus is cut off.

With reference to the first aspect, in some implementations, the unidirectional conduction apparatus is a diode, an anode of the diode is connected to the EN pin of the PWM controller, and a cathode of the diode is connected to the SYNC pin.

With reference to the first aspect, in some implementations, the DrMOS includes a driver, a first switching transistor, and a second switching transistor. For the first switching transistor, a drain is connected to the high-voltage input terminal of the voltage regulator circuit, a gate is connected to a first output terminal of the driver, and a source is connected to an output terminal of the DrMOS. For the second switching transistor, a drain is connected to the output terminal of the DrMOS, a gate is connected to a second output terminal of the driver, and a source is grounded. An input terminal of the driver is connected to an output terminal of the PWM controller.

With reference to the previous implementation, the first switching transistor may be an N-type field-effect transistor, and the second switching transistor may be an N-type field-effect transistor.

With reference to the previous implementation, when the PWM voltage signal is on a positive half-cycle, the first output terminal of the driver outputs a first drive signal, the first switching transistor is turned on, and the second switching transistor is cur off; and when the PWM voltage signal is on a negative half-cycle, the second output terminal of the driver outputs a second drive signal, the first switching transistor is cut off, and the second switching transistor is turned on.

With reference to the previous implementation, the second circuit further includes a first inductor and a second capacitor, a first terminal of the first inductor is connected to the output terminal of the DrMOS, both a second terminal of the first inductor and a first terminal of the second capacitor are connected to a high-voltage output terminal of the voltage regulator circuit, and a second terminal of the second capacitor is grounded.

With reference to the first aspect, in some implementations, the high-voltage input terminal of the voltage regulator circuit is connected to a high-voltage output terminal of a power supply.

With reference to the first aspect, in some implementations, the high-voltage output terminal of the voltage regulator circuit is connected to a high-voltage input terminal of a load.

With reference to the previous implementation, a current that is output from the high-voltage output terminal of the voltage regulator circuit to the load is a sum of output currents of enabled first circuits in the N first circuits.

With reference to the first aspect, in some implementations, the voltage regulator circuit is connected to the load, and the load includes any one of the following: a CPU, a GPU, and an ASIC.

With reference to the first aspect, in some implementations, the input terminal of the enable signal of the PWM controller is a GPIO interface. The GPIO interface may be configured to receive a control signal from a control unit (such as a CPU or an EC).

With reference to the first aspect, in some implementations, the PWM controller is integrated into a first chip, the DrMOS is integrated into a second chip, and the first chip and the second chip are different.

According to a second aspect, an electronic device is provided. The electronic device includes the voltage regulator circuit provided in the first aspect or any implementation of the first aspect.

With reference to the second aspect, in some implementations, the electronic device further includes a power supply, and the power supply is configured to input a voltage into the voltage regulator circuit.

With reference to the second aspect, in some implementations, the electronic device further includes a load, and a voltage that is output by the voltage regulator circuit is used to be provided to the load.

According to a third aspect, a voltage regulating method is provided, and is applied to the electronic device provided in the second aspect or any implementation of the second aspect. The method may include: An electronic device detects an operation of enabling a load, inputs a logic high level into an EN pin of a PWM controller, detects an operation of disabling the load, and inputs a logic low level into the EN pin of the PWM controller.

Based on the method in the third invention, the electronic device can reduce a relatively large voltage by using the voltage regulator circuit and output the reduced voltage, to meet an actual requirement of a next-stage load, and can further reduce additional power consumption on a VCC pin of a DrMOS when the next-stage load is not working.

With reference to the third aspect, in some implementations, the electronic device inputs a logic high level or a logic low level into the EN pin of the PWM controller through a GPIO interface.

With reference to the third aspect, in some implementations, after inputting the logic high level into the EN pin of the PWM controller, the electronic device may further obtain a voltage requirement of the load, and adjust, based on the voltage requirement of the load, a duty cycle of a PWM voltage signal that is output by the PWM controller to a second circuit. For example, if the voltage requirement of the load increases, the duty cycle is increased, or otherwise, the duty cycle is decreased.

With reference to the third aspect, in some implementations, the electronic device may further obtain a current requirement of the load, and adjust a quantity of enabled first circuits in N first circuits of the voltage regulator circuit based on the current requirement of the load. For example, if the current requirement of the load increases, the quantity of enabled first circuits is increased, or otherwise, the quantity of enabled first circuits is decreased.

According to a fourth aspect, a PCB board is provided, including the voltage regulator circuit in the first aspect or any implementation of the first aspect.

According to a fifth aspect, a chip is provided, and the chip includes the voltage regulator circuit in the first aspect or any implementation of the first aspect.

According to a sixth aspect, a power supply system is provided, and the power supply system may include a power supply, the voltage regulator circuit in the first aspect or any implementation of the first aspect, and a load. The power supply is configured to provide an input voltage for the voltage regulator circuit, and the voltage regulator circuit is configured to: reduce the input voltage provided by the power supply, and output the reduced input voltage to the load.

According to a seventh aspect, a power supply circuit is provided, and the power supply circuit may include a power supply and the voltage regulator circuit in the first aspect or any implementation of the first aspect. The power supply is configured to provide an input voltage for the voltage regulator circuit, and the voltage regulator circuit is configured to: reduce the input voltage provided by the power supply, and output the reduced input voltage.

According to an eighth aspect, a power supply system is provided, and the power supply system may include the voltage regulator circuit in the first aspect or any implementation of the first aspect and a load. The voltage regulator circuit is configured to reduce a received input voltage and output the reduced input voltage to the load.

According to a ninth aspect, a readable storage medium including instructions is provided. When the instructions are run on a device, the device is enabled to perform the method in the third aspect or any implementation of the third aspect.

According to a tenth aspect, a program product is provided. When the program product is run on a device, the device is enabled to perform the method in the third aspect or any implementation of the third aspect.

According to an eleventh aspect, a chip system is provided, and the chip system includes at least one processor, configured to implement the method in the third aspect or any implementation of the third aspect.

### BRIEF DESCRIPTION OF DRAWINGS

FIG. 1 is a structural diagram of a single-phase VRM according to an embodiment of this application;
FIG. 2 is a structural diagram of a multi-phase VRM according to an embodiment of this application;
FIG. 3 is a schematic diagram of some pins of an MP2886, some pins of an MP86941, and some peripheral structures according to an embodiment of this application;
FIG. 4 is a diagram of a partial structure of an improved VRM according to an embodiment of this application;
FIG. 5 is a diagram of an internal structure of an SPS/DrMOS according to an embodiment of this application;
FIG. 6 is a diagram of a partial structure of an improved VRM according to an embodiment of this application;
FIG. 7 is a diagram of a partial structure of an improved VRM according to an embodiment of this application;
FIG. 8 is a diagram of a partial structure of an improved VRM according to an embodiment of this application;
FIG. 9 is a diagram of a partial structure of an improved VRM according to an embodiment of this application; and
FIG. 10 is a structural diagram of an electronic device according to an embodiment of this application.

### DESCRIPTION OF EMBODIMENTS

The following clearly and completely describes the technical solutions in embodiments of this application with reference to the accompanying drawings.

Several concepts involved in this application are first described.

### VRM

The VRM is configured to convert a larger direct-current voltage (for example, 12 V) output by a power supply in an electronic device into a stable smaller direct-current voltage (for example, 0.5 V - 2 V), and output the stable smaller direct-current voltage to modules such as a CPU, a GPU, and an ASIC, to meet working voltage requirements of the foregoing modules.

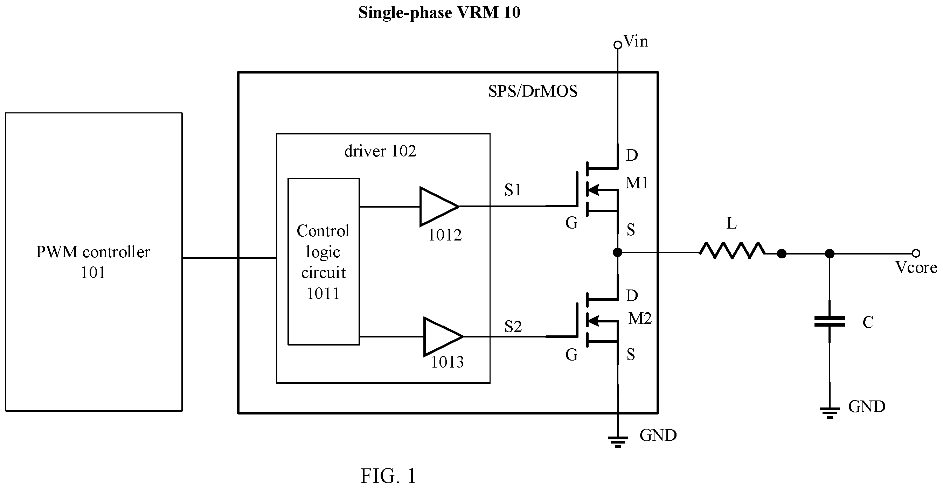

FIG. 1 is a schematic diagram of a single-phase voltage regulator module (single-phase VRM) 10. The single-phase VRM 10 may also be referred to as a single-phase DC-DC Buck-type voltage reduction circuit.

The single-phase VRM 10 may include a pulse-width modulation (pulse-width modulation controller, PWM) controller (controller) 101, a driver (driver) 102, a high side power-stage field-effect transistor (high side field-effect transistor, HS-FET) M1, a low side power-stage field-effect transistor (LS-FET) M2, an inductor L, and a capacitor C. The single-phase VRM 10 further includes a first input terminal, a second input terminal, a first output terminal, and a second output terminal.

The first input terminal is also referred to as a high-voltage input terminal, is connected to a high-voltage output terminal of a device power supply, and is configured to receive an input voltage Vin. The second input terminal is also referred to as a low-voltage input terminal, and is connected to a low-voltage output terminal of the device power supply. The first output terminal is also referred to as a high-voltage output terminal, is connected to an input terminal of a next-stage load, and is configured to output a core voltage Vcore required by the next-stage load. The second output terminal is also referred to as a low-voltage output terminal, and is connected to another input terminal of the next-stage load. Both the second input terminal and the second output terminal may be connected to a ground terminal (GND). The input voltage Vin may be an output voltage of the device power supply, and the device power supply may be a battery. The next-stage load refers to a module with a special working voltage requirement, such as a CPU, a GPU, or an ASIC.

The PWM controller 101 is connected to the driver 102 and is configured to output a PWM voltage signal to the driver 102. The PWM voltage signal may be generated by a comparator CP in the PWM controller 101. The comparator compares a fixed reference voltage Vref with a core voltage Vcore that is output by the single-phase VRM 10. The PWM controller 101 is configured to control a duty cycle of a PWM waveform based on a real-time requirement of the load, so that an output voltage is stabilized at a required value of the core voltage Vcore. The PWM voltage signal that is output by the PWM controller 101 is an analog signal with alternating high and low levels. When the PWM voltage signal is at a high level, the PWM voltage signal is on a positive half-cycle. When the PWM voltage signal is at a low level, the PWM voltage signal is on a negative half-cycle.

The driver 102 may include one control logic circuit (control logic circuit) 1011 and two driver circuits (driver circuit) 1012 and 1013.

M1 or M2 may be an N-type field-effect transistor, or may be a P-type field-effect transistor.

A drain (D) of M1 is connected to the first input terminal, a gate (G) of M1 is connected to an output terminal of the driver circuit 1012, and a source (S) of M1 is connected to a first terminal of L. A drain (D) of M2 is connected to the first terminal of L, a gate (G) of M2 receives an output terminal of the driver circuit 1013, and a source (S) of M2 is connected to the second input terminal. A second terminal of L is connected to the first output terminal, and is configured to output the core voltage Vcore required by the next-stage load to the next-stage load. A first terminal of C is connected to a second terminal of L, and a second terminal of C is connected to the second output terminal.

When the PWM voltage signal that is output by the PWM controller 101 is on a positive half-cycle, the control logic circuit 1011 in the driver 102 generates a signal, the signal is used to cause the driver circuit 1012 to output a first drive signal S1 to M1, M1 is turned on, M2 is turned off/cut off, a current flows through M1 and L from VCC and charges C, and L generates self-induced electromotive force. When the PWM voltage signal that is output by the PWM controller 101 is on a negative half-cycle, the control logic circuit 1011 in the driver 102 generates a signal, the signal is used to cause the driver circuit 1013 to output a second drive signal S2 to the M2, M1 is turned off/cut off, M2 is turned on, and a current in L attempts to maintain an existing magnetic field thereof, which causes a voltage to be reversed and accumulated in C. After electromotive force on L decreases or hour, C outputs a power supply voltage to the next-stage load. In this way, under the action of the PWM voltage signal, the driver 102 controls frequent switching between M1 and M2, to provide a continuously stable current and voltage for the next-stage load.

M1, M2, and the driver 102 are integrated into one chip. A component in this integration solution is referred to as a smart power stage (smart power stage, SPS) module, or may be referred to as a DrMOS, and can reduce an overall size and improve power density and efficiency. The SPS/DrMOS may also be integrated with an overcurrent protection circuit for controlling an output current to prevent an output current from exceeding a rated value; or the SPS/DrMOS may be integrated with an error detection circuit for detecting faults such as overheating, overvoltage, and an open circuit.

An output terminal of the DrMOS is connected to the source (S) of M1, the drain (D) of M2, and the first terminal of L.

A phase of the VRM refers to a circuit including the driver 102, M1, M2, the inductor L, and the capacitor C. To meet requirements of different loads and improve output power, a multi-phase voltage regulator module (multi-phase VRM) is introduced.

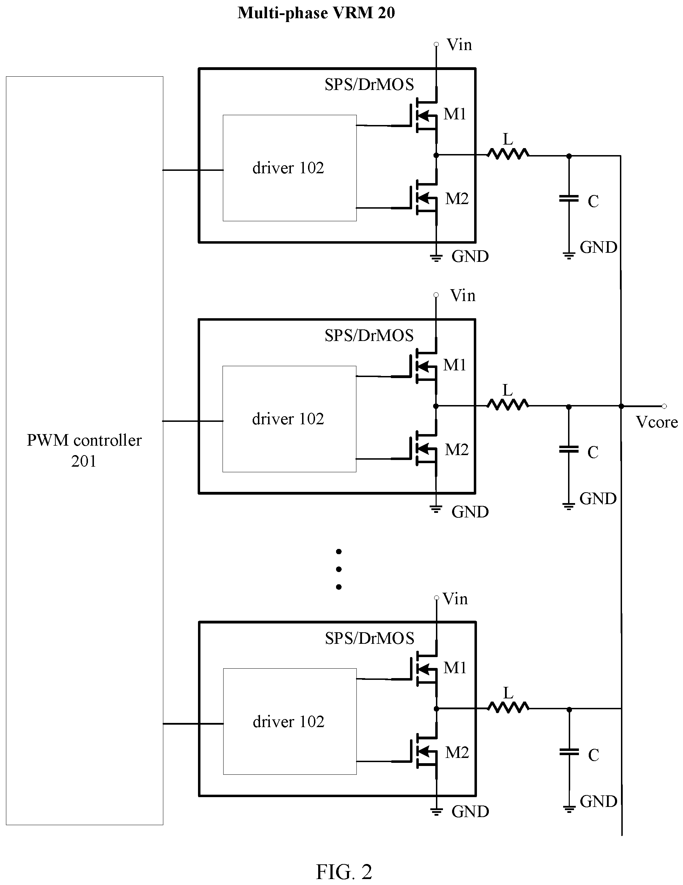

FIG. 2 is a schematic diagram of a multi-phase VRM 20. The multi-phase VRM 20 may also be referred to as a multi-phase DC-DC Buck-type voltage reduction circuit.

The multi-phase VRM 20 may include a PWM controller 201 and a plurality of interleaved parallel single-phase circuits. A structure of each single-phase circuit is the same as that of the single-phase circuit shown in FIG. 1. A first output terminal of each single-phase circuit is connected to an input terminal of a next-stage load, and is configured to output a core voltage Vcore required by the next-stage load. The PWM controller 201 is configured to respectively provide one PWM voltage signal for some or all of the plurality of single-phase circuits. A current that is output by the multi-phase VRM 20 to the next-stage load is a sum of output currents of several enabled single-phase circuits in the plurality of single-phase circuits.

The multi-phase VRM 20 needs to use a plurality of SPSs/DrMOSs.

### Additional power consumption generated by a VRM

A VRM in some possible implementations may have additional power consumption, which is, for example, specifically as follows:
Some PWM controllers and SPSs/DrMOSs of specific structures may lead to additional power consumption. Generally, the PWM controller may be integrated into a power management IC chip that may be referred to as a PWM control chip, and the SPS/DrMOS may be integrated into another power management IC chip that may be referred to as an SPS/DrMOS chip. Structures of the PWM control chip and the SPS/DrMOS chip that lead to additional power consumption are described below.

The PWM control chip includes a structure of the PWM controller 201 in FIG. 2, and further includes an enable pin EN. The EN pin may be connected to a signal interface (such as a general purpose input output (general purpose input output, GPIO) interface that is configured to receive an enable signal sent by the EN pin, where the enable signal is also referred to as a control signal, and the control signal may be from a control unit (such as a CPU or an embedded controller (embedded controller, EC)) in an electronic device). The PWM control chip works only when the EN pin receives a logic high level, to implement the foregoing function of the PWM controller, and the PWM control chip does not work when the EN pin receives a logic low level.

When a next-stage load (such as a GPU) of the VRM is working, the EN pin of the PWM control chip is at a logic high level, so that the PWM control chip implements the foregoing function of the PWM controller. When the next-stage load (such as the GPU) of the VRM is not working, the EN pin of the PWM control chip is at a logic low level, and the PWM control chip does not run.

Referring to Table 1, Table 1 shows a logic level condition of the EN pin of the PWM control chip.

**Table 1**

| Input voltage of the EN pin | Value requirement |
|---|---|
| Input low level (input low voltage) V_{IL(EN)} | Less than 0.4 V |
| Input high level (input high voltage) V_{HL(EN)} | Greater than 0.8 V |

As shown in Table 1, the logic high level of the EN pin of the PWM control chip is required to be greater than 0.8 V, for example, may be 3.3 V or another value.

The SPS/DrMOS chip includes one SPS/DrMOS in FIG. 1 or a plurality of SPSs/DrMOSs in FIG. 2.

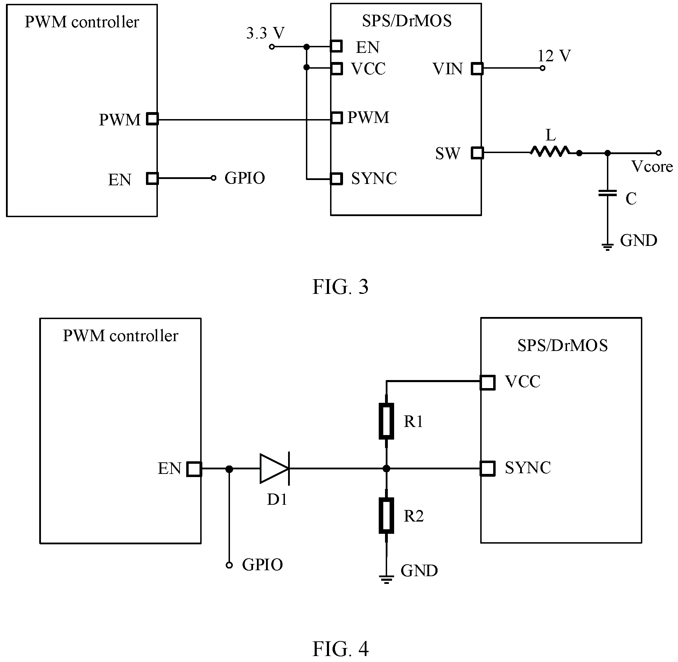

Referring to FIG. 3, FIG. 3 schematically shows some pins of the PWM control chip, some pins of the SPS/DrMOS chip, and some peripheral structures. As shown in FIG. 3, the PWM control chip may include a PWM pin, an EN pin, and the like, and the SPS/DrMOS chip includes an EN pin, a VCC pin, a SYNC pin, a PWM pin, a VIN pin, and some other pins (for example, an SW pin configured to output an on/off signal, and a GND pin). The EN pin of the PWM control chip may be connected to the GPIO to receive an enable signal. The PWM pin of the PWM control chip is directly connected to the PWM pin of the SPS/DrMOS chip, and the PWM pin of the PWM control chip is configured to output a PWM voltage signal to the PWM pin of the SPS/DrMOS chip. The switching SW pin of the SPS/DrMOS chip is connected to a first terminal of an inductor L in the VRM, and L may be the inductor L in FIG. 1 or FIG. 2.

In the SPS/DrMOS chip, the VCC pin is configured to receive a power supply voltage that drives the SPS/DrMOS chip. The VCC pin is generally directly connected to a common VCC network in the electronic device, to receive a drive voltage that is output by the common VCC network. The drive voltage may be, for example, 3.3 V. Generally, as shown in FIG. 3, on a periphery of the SPS/DrMOS chip, the SYNC pin is also directly connected to the common VCC network, and is configured to receive the power supply voltage (for example, 3.3 V) that drives the SPS/DrMOS chip. The PWM pin is configured to receive a PWM voltage signal that is output by a previous-stage PWM controller. The VIN pin is connected to a high-voltage output terminal of a device power supply, and is configured to receive a direct-current voltage that is output by the device power supply.

The SYNC pin is a mode switching control pin of the chip. When the pin is at a high level, the SPS/DrMOS chip enters a normal working mode (active mode). When the pin is at an intermediate-state level or is floating, the SPS/DrMOS chip enters a standby mode (standby mode). When the pin is at a low level, the SPS/DrMOS chip enters a diode emulation mode. The diode emulation mode is as follows: When a current in the inductor L flows from a second terminal to the first terminal, M2 is turned on, and when the current in the inductor L flows from the first terminal to the second terminal, M2 is cut off, to prevent the current from reversing.

When the SYNC pin is floating or is enabled to be at the intermediate-state level, the SPS/DrMOS chip enters the standby mode, and stops working, and even if the SPS/DrMOS chip receives the PWM voltage signal, the SPS/DrMOS chip does not output a voltage, that is, enters the standby mode. When the SPS/DrMOS chip enters in the normal working mode, the SPS/DrMOS chip works provided that the SPS/DrMOS chip receives a PMW signal that is input by the PWM controller.

The SYNC pin may receive a high level, a low level, and an intermediate-state level. Referring to Table 2, Table 2 shows a tri-state voltage range of the SYNC pin of the SPS/DrMOS chip.

**Table 2**

| Logic voltage of the SYNC pin | Value requirement |
|---|---|
| SYNC logic high level (logic high voltage) | Greater than 2.4 V |
| SYNC intermediate-state level (tri-state region), that is, intermediate-state level Hi-Z | 1.3 V - 1.7 V |
| SYNC logic low level (logic low voltage) | Less than 0.7 V |

As shown in Table 2, the intermediate-state level of the SYNC pin is between the logic high level and the logic low level. When the SYNC pin is in an intermediate state, the SPS/DrMOS chip is disconnected from another connected component, that is, enters the standby mode.

Referring to Table 3, Table 3 shows a correspondence between an SPS/DrMOS mode, a SYNC pin state, and a quiescent current on the VCC pin. The quiescent current on the VCC pin is a current in a case in which no signal is input into the SPS/DrMOS, that is, a current consumed by the component without being affected by an external factor.

**Table 3**

| SPS/DrMOS mode | SYNC pin state and related state | Current on the VCC pin |
|---|---|---|
| Active mode (active mode) | PWM = low, no switching, | Quiescent current on the VCC pin in the active mode (VCC quiescent current in active mode) |
| | SYNC = high or low | |
| | | I_{CC_QUIESCENT} = 4 mA |
| Standby mode (standby mode) | SYNC = Hi-Z | Quiescent current on the VCC pin in the standby mode (VCC quiescent current in standby mode) |
| | | I_{CC_STBY} = 30 µA |

As shown in Table 3, when the SYNC pin is at the logic high level, a quiescent current of approximately 4 mA exists on the VCC pin, and power consumption of 3.3 V * 4 mA = 13.2 mW exists on the VCC pin. When the SYNC pin is at the intermediate-state level, a quiescent current of approximately 30 µA exists on the VCC pin, and power consumption of only 3.3 V * 30 µA = 99 µW exists on the VCC pin, which is far lower than the power consumption existing on the SYNC pin when the SYNC pin is at the logic high level.

When the next-stage load (such as the GPU) of the VRM is working, the SYNC pin of the SPS/DrMOS chip is at the logic high level. A solution of a direct connection between the SYNC pin and the VCC pin can meet this requirement. When the SYNC pin is at the logic high level, the SPS/DrMOS chip implements the foregoing function of the SPS/DrMOS.

However, when the next-stage load (such as the GPU) of the VRM is not working, the solution of a direct connection between the SYNC pin and the VCC pin leads to additional power consumption of 3.3 V * 4 mA = 13.2 mW on the VCC pin. If the VRM disposed in the electronic device is a single-phase VRM, there is additional power consumption of approximately 13.2 mW. If the VRM disposed in the electronic device is a multi-phase VRM, there is additional power consumption of approximately 13.2 mW * a quantity of phases. If a plurality of VRMs are disposed in the electronic device, the foregoing additional power consumption is further increased.

The foregoing additional power consumption not only exists in a VRM that uses the SPS/DrMOS chip as an SPS/DrMOS, but also generally exists in a VRM that has the following features: The SPS/DrMOS includes a SYNC pin and a VCC pin, and when the SYNC pin is at a logic high level, there is a relatively large quiescent current on the VCC pin, and the SYNC pin continuously receives the logic high level.

To resolve the foregoing problem, this application provides a power consumption optimization solution. In this solution, a peripheral connection relationship of a SYNC pin of an SPS/DrMOS in a VRM is improved, to achieve the following objectives: When a next-stage load of the VRM is working, a logic high level is input into the SYNC pin, so that the SPS/DrMOS works normally; and when the next-stage load of the VRM is not working, the SYNC pin is set to an intermediate state, so that the SPS/DrMOS enters a standby mode, thereby decreasing a quiescent current on a VCC pin and reducing additional power consumption on the VCC pin.

The optimization solution provided in this application may be used to improve a peripheral connection relationship of a SYNC pin of a single-phase VRM, or may be used to improve peripheral connection relationships of a plurality of SYNC pins in a multi-phase VRM.

The solution provided in this application may be applied to a VRM that has the foregoing problem and in which a smaller quiescent current exists on a VCC pin when a SYNC pin of an SPS/DrMOS is in an intermediate state as compared with a case in which the SYNC pin is at a logic high level. For example, the solution may be applied to a VRM that uses a PWM control chip as a PWM controller and an SPS/DrMOS chip as an SPS/DrMOS. In this example, when a next-stage load of the VRM is not working, power consumption of only 3.3 V * 30 µA = 99 µW exists on a VCC pin of one SPS/DrMOS. Compared with power consumption of 3.3 V * 4 mA = 13.2 mW existing on a VCC pin of one SPS/DrMOS in the foregoing problem, additional power consumption of one SPS/DrMOS is significantly reduced. When a multi-phase VRM or a plurality of VRMs are disposed in the electronic device, overall additional power consumption is further reduced.

### Improved VRM

An improvement point to the VRM provided in this application mainly relates to the following three pins: an EN pin of a PWM controller, and a SYNC pin and a VCC pin of an SPS/DrMOS. For ease of description, all EN pins mentioned subsequently are EN pins of the PWM controller, all SYNC pins mentioned subsequently are SYNC pins of the SPS/DrMOS, and all VCC pins mentioned subsequently are VCC pins of the SPS/DrMOS.

### (1) First type of improved VRM

Referring to FIG. 4, FIG. 4 shows a peripheral connection manner of a SYNC pin in an improved VRM according to an embodiment of this application.

As shown in FIG. 4, two resistors R1, R2 and one unidirectional conduction apparatus D1 are added to a periphery of a PWM controller and an SPS/DrMOS. In other words, D1 and the resistors R1 and R2 belong to a peripheral circuit of the PWM controller and the SPS/DrMOS, and the peripheral circuit is not integrated into a same chip as the PWM controller and the SPS/DrMOS. A first terminal of R1 is connected to a VCC pin, and a second terminal of R1 is connected to a SYNC pin. A first terminal of R2 is connected to the SYNC pin, and a second terminal of R2 is grounded. A first terminal of D1 is connected to an EN pin of the PWM controller, and a second terminal of D2 is connected to the SYNC pin. When a voltage at the first terminal of D1 is greater than a voltage at the second terminal and a difference reaches an on-voltage drop of D1, D1 is unidirectionally turned on from the first terminal to the second terminal. D1 may be a unidirectional conduction component or a unidirectional conduction circuit that forms a relatively small on-voltage drop (less than 1 V), for example, may be a diode.

Therefore, on a periphery of the SPS/DrMOS, the SYNC pin is no longer directly connected to the VCC pin.

When a next-stage load of the VRM is working, a voltage on the SYNC pin is at a logic high level. Specifically, this is implemented by using the following logic: When the next-stage load of the VRM is working, the EN pin of the PWM controller is at a logic high level; R1 and R2 divide a voltage between the VCC pin and a ground terminal, and a voltage on the SYNC pin is a divided voltage of R2; a voltage difference from the first terminal of D1 to the second terminal (that is, a voltage difference between the EN pin and the SYNC pin) is greater than an on-voltage drop of D1, and therefore, D1 is turned on from the first terminal to the second terminal; and then, the voltage on the SYNC pin is equal to a voltage on the EN pin minus the divided voltage of R2, and the voltage on the SYNC pin is at the logic high level.

For example, if it is assumed that a power supply voltage received by the VCC pin is 3.3 V, and R1 and R2 have a same resistance value, the divided voltage of R2 on the SYNC pin is 1.65 V; if it is assumed that when the next-stage load of the VRM is working, the logic high level of the EN pin is 3.3 V, and the on-voltage drop of D1 is 0.3 V, D1 is turned on, and a voltage on the SYNC pin after D1 is turned on is 3 V; and if a tri-state voltage on the SYNC pin is shown in Table 2, the voltage on the SYNC pin is at the logic high level.

When the next-stage load of the VRM is not working, the voltage on the SYNC pin is at an intermediate-state level. Specifically, this is implemented by using the following logic: R1 and R2 divide a voltage between the VCC pin and a ground terminal, and a voltage on the SYNC pin is a divided voltage of R2; the EN pin of the PWM controller is at a logic low level, and a voltage difference from the first terminal of D1 to the second terminal (that is, a voltage difference between the EN pin and the SYNC pin) is less than an on-voltage drop of D1, and therefore, D1 is not turned on from the first terminal to the second terminal; and the voltage on the SYNC pin is still the divided voltage of R2, and the voltage on the SYNC pin is at an intermediate-state level.

For example, if it is assumed that a power supply voltage received by the VCC pin is 3.3 V, and R1 and R2 have a same resistance value, the divided voltage of R2 on the SYNC pin is 1.65 V; if it is assumed that when the next-stage load of the VRM is not working, the logic low level of the EN pin is 0.3 V, and the on-voltage drop of D1 is 0.3 V, D1 is not turned on, and the voltage on the SYNC pin is still the divided voltage 1.65 V of R2; and if a tri-state voltage on the SYNC pin is shown in Table 2, the voltage on the SYNC pin is at the intermediate-state level.

R1, R2, the voltage on the VCC pin, a logic level of the EN pin, the on-voltage drop of D1, and the like provided in this application are used to meet the implementation logic in the foregoing two cases.

### (2) Second type of improved VRM

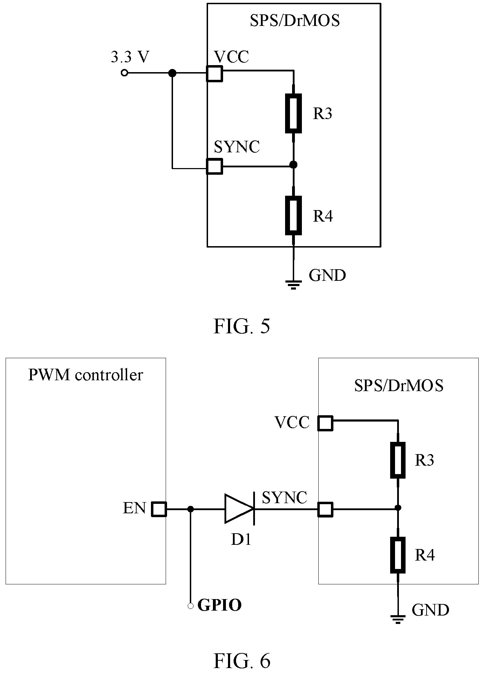

Referring to FIG. 5, FIG. 5 shows an example of an internal structure of an SPS/DrMOS. As shown in FIG. 5, inside the SPS/DrMOS, a resistor R3 is connected between a SYNC pin and a VCC pin, and a resistor R4 is connected between the SYNC pin and GND.

Based on the SPS/DrMOS shown in FIG. 5, referring to FIG. 6, FIG. 6 shows a peripheral connection manner of a SYNC pin in an improved VRM according to an embodiment of this application.

As shown in FIG. 6, a unidirectional conduction apparatus D1 is added to a periphery of a PWM controller and the SPS/DrMOS shown in FIG. 5. In other words, D1 belongs to a peripheral circuit of the PWM controller and the SPS/DrMOS, and D1 is not integrated into a same chip as the PWM controller and the SPS/DrMOS. A first terminal of D1 is connected to an EN pin of the PWM controller, and a second terminal of D2 is connected to the SYNC pin. When a voltage at the first terminal of D1 is greater than a voltage at the second terminal and a difference reaches an on-voltage drop of D1, D1 is unidirectionally turned on from the first terminal to the second terminal. In this way, R3 can implement a function of R1 in FIG. 4, and R4 can implement a function of R2 in FIG. 4. In this way, a VRM based on the structure in FIG. 6 can implement the foregoing logic of the VRM that is based on the structure in FIG. 4. For details, reference may be made to the foregoing descriptions.

In some implementations, R1 in FIG. 4 and R3 and R4 in FIG. 6 may coexist. In this way, R4 and a parallel resistance value of R1 and R3 divide a voltage between the VCC pin and the ground terminal.

In some implementations, R2 in FIG. 4 and R3 and R4 in FIG. 6 may coexist. In this way, a parallel resistance value of R3, R2, and R4 divides a voltage between the VCC pin and the ground terminal.

In some implementations, R1 and R2 in FIG. 4 and R3 and R4 in FIG. 6 may coexist. In this way, a parallel resistance value of R1 and R3 and a parallel resistance value of R2 and R4 divide a voltage between the VCC pin and the ground terminal.

In the foregoing three implementations, a divided voltage on the SYNC pin may be changed through a parallel connection between R1 and R3 and/or a parallel connection between R2 and R4. R1 and/or R2 are/is disposed based on actual requirements, so that a voltage on the SYNC pin is at a proper intermediate-state level when a next-stage load of the VRM is not working. The proper intermediate-state level may be an intermediate range of an intermediate-state level range of the SYNC pin. For example, when the intermediate-state level range of the SYNC pin is 1.3 V - 1.7 V as shown in Table 2, the proper intermediate-state level may be approximately 1.5 V. The proper intermediate-state level can improve stability of the VRM, and ensure that a purpose of this application is achieved.

In some implementations, only R3 may be included inside the SPS/DrMOS, and R4 is not included. In this case, the SPS/DrMOS needs to be used in cooperation with R2 in FIG. 4. Alternatively, only R4 may be included inside the SPS/DrMOS, and R3 is not included. In this way, the SPS/DrMOS needs to be used in cooperation with R1 in FIG. 4.

### (3) Third type of improved VRM

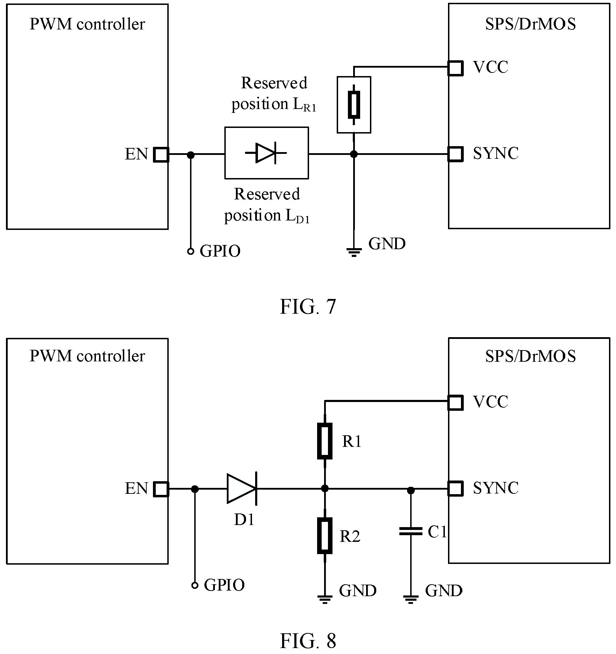

Referring to FIG. 7, FIG. 7 shows a peripheral connection manner of a SYNC pin in an improved VRM according to an embodiment of this application. The VRM includes the SPS/DrMOS shown in FIG. 5.

As shown in FIG. 7, on a periphery of a PWM controller and the SPS/DrMOS shown in FIG. 5, a reserved position L_{D1} of a unidirectional conduction apparatus D1 is disposed between an EN pin and a SYNC pin, and a reserved position L_{R1} of a resistor R1 is disposed between a VCC pin and the SYNC pin. When L_{D1} is not integrated with a component, the EN pin and the SYNC pin are disconnected. When L_{R1} is not integrated with a component, the VCC pin and the SYNC pin are disconnected on the periphery. In other words, the reserved position L_{D1} and the reserved position L_{R1} are located in a peripheral circuit of the PWM controller and the SPS/DrMOS, and the peripheral circuit is not integrated into a same chip as the PWM controller and the SPS/DrMOS.

If D1 is disposed on L_{D1}, and R1 is not disposed on L_{R1}, the EN pin and the SYNC pin are connected through D1, and the VCC pin and the SYNC pin are disconnected on the periphery. D1, R3, and R4 may be used to implement an objective of this application, that is, when a next-stage load of the VRM is working, a logic high level is input into the SYNC pin, so that the SPS/DrMOS works normally, and when the next-stage load of the VRM is not working, the SYNC pin is set to an intermediate state, to reduce additional power consumption on the VCC pin.

If D1 is not disposed on L_{D1}, and R1 of 0 Ω is disposed on L2, the EN pin and the SYNC pin are disconnected, and the VCC pin is directly connected to the SYNC pin on the periphery. This connection manner is the VRM with relatively large additional power consumption shown in FIG. 3.

It can be learned that in the VRM shown in FIG. 7, components may be integrated on L_{D1} and L_{R1} based on an actual requirement, to implement different functions.

### (4) Fourth type of improved VRM

During normal working of a PWM controller, the VRM outputs a voltage when an EN pin of the PWM controller is at a logic high level, and the VRM does not output a voltage when the EN pin of the PWM controller is at a logic low level.

It can be learned based on the improved VRM described above that, a SYNC pin enters a high level state as the EN pin is set to the logic high level, and enters an intermediate-state level as the EN pin is set to the logic low level. It can be learned that a voltage drop of a SYNC pin of an SPS/DrMOS and a voltage drop of the EN pin of the PWM controller occur at the same time. However, a voltage range in which the SYNC pin enters an intermediate state is approximately 1.3 V ~ 1.7 V, and a voltage threshold for the EN pin to enter a low level is approximately 0.4 V, which is lower than that for the intermediate-state level of the SYNC pin. Therefore, at an instant at which the VRM does not output a voltage, the SPS/DrMOS may enter a standby mode first, and after a period of time t, the EN pin of the PWM controller enters the low level. Within the time period t, the EN pin of the PWM controller is in an enabled state, but the SPS/DrMOS enters the standby mode. If the VRM does not output a voltage when the PWM controller detects that the PWM controller has enabled output, the PWM controller reports an undervoltage fault of an output voltage.

To avoid the foregoing undervoltage fault, this application further provides an improved VRM, so that the SYNC pin can be powered off more slowly than the EN pin; in other words, it can be ensured that the SYNC pin enters an intermediate-state level from a high level after the EN pin enters a low level, thereby eliminating reporting of the undervoltage fault at an instant of power off.

Referring to FIG. 8, FIG. 8 shows a peripheral connection manner of a SYNC pin in an improved VRM according to an embodiment of this application.

As shown in FIG. 8, on a basis of the structure shown in FIG. 4, a capacitor C1 is added on a periphery of a PWM controller and an SPS/DrMOS, a first terminal of C1 is connected to a SYNC pin, and a second terminal of C1 is grounded. In other words, C1 is located in a peripheral circuit of the PWM controller and the SPS/DrMOS, and C1 is not integrated into a same chip as the PWM controller and the SPS/DrMOS.

When a next-stage load of the VRM is working, an EN pin of the PWM controller is at a logic high level, D1 is turned on, and a voltage on the SYNC pin is at the logic high level. In this case, the capacitor C1 is charged, and voltage polarity is positive on an upper end and negative on a lower end, and shortly afterwards, the capacitor is charged to a capacitor voltage close to a logic high level that is input into the EN pin. When the next-stage load of the VRM is not working, the EN pin of the PWM controller is at a logic low level, and D1 is cut off. In this case, the capacitor C1 gradually discharges, and a voltage released by C1 is superposed on a divided voltage of R2, and is then output to the SYNC pin. Therefore, a voltage on the SYNC pin gradually decreases from a logic high level to an intermediate-state level. It can be learned that C1 may be configured to adjust a timing sequence in which the SYNC pin enters the intermediate-state level from the logic high level, so that the SYNC pin is powered off more slowly than the EN pin.

The fourth type of improved VRM may be combined with any one of the foregoing improved VRMs; in other words, C1 may be added on a basis of FIG. 4, C1 may be added on a basis of FIG. 6, C1 may be added in an optional implementation of FIG. 6, or C1 may be added in FIG. 7. The first terminal of C1 is connected to the SYNC pin, the second terminal of C1 is grounded, and a same function of C1 in FIG. 8 can be implemented.

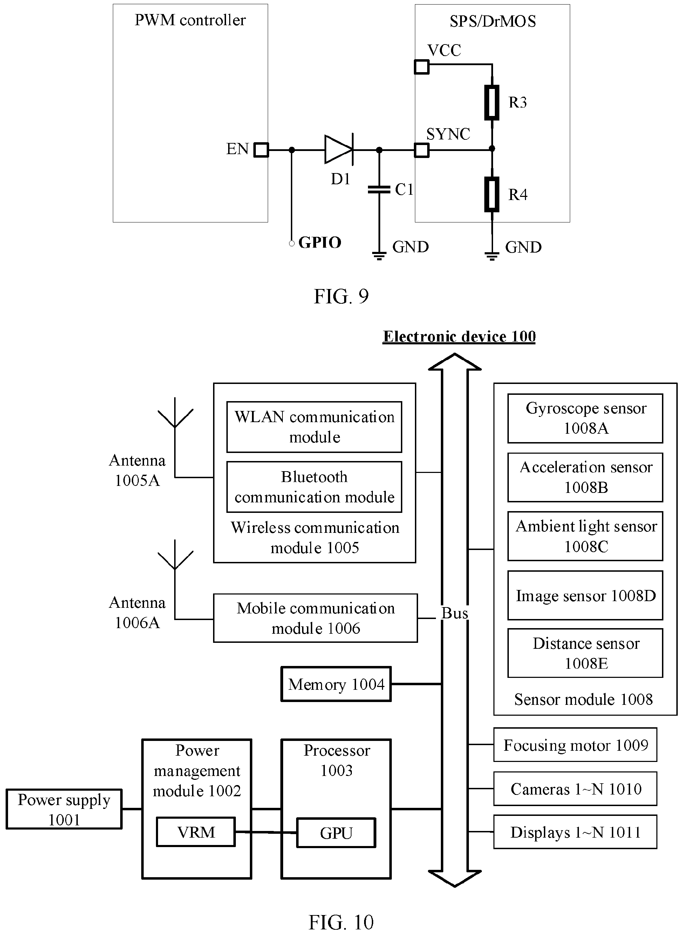

For example, referring to FIG. 9, FIG. 9 shows a peripheral connection manner of a SYNC pin in improved VRM according to an embodiment of this application. C1 is added to the VRM based on the SPS/DrMOS shown in FIG. 6.

C1 may also be referred to as a first capacitor.

Similarly, a power-on process of a PWM controller also has a same undervoltage risk. After the PWM controller is powered on, a SYNC pin of the SPS/DrMOS may enter a high level only after a period of time t. Within the time period t, an EN pin of the PWM controller is in an enabled state, but the SPS/DrMOS is still in a standby mode. If the VRM does not output a voltage when the PWM controller detects that the PWM controller has enabled output, the PWM controller reports an undervoltage fault of an output voltage. Therefore, after the EN pin of the PWM controller enters a logic high level, an internal component of the PWM controller may start working after a period of time of delay. In this way, the PWM controller can be prevented from entering the enable stated before the SPS/DrMOS in the power-on process, thereby eliminating reporting of an output undervoltage fault at an instant of power on.

In the improved VRM in this application, a circuit including the DrMOS, L, C, and the foregoing peripheral structure of the PWM controller and the DrMOS in FIG. 4 and FIG. 6 - FIG. 8 may be referred to as a first circuit, and a circuit including the DrMOS, L, and C may be referred to as a second circuit. L and C may be L and C in FIG. 1 or FIG. 2, L may also be referred to as a first inductor, and C may also be referred to as a second capacitor.

M1 in FIG. 1 or FIG. 2 may also be referred to as a first switching transistor, and M2 may also be referred to as a second switching transistor.

A pull-up resistor module may include R1 and/or R3 mentioned above, and a pull-down resistor module may include R2 and/or R4 mentioned above. R1 may be referred to as a first resistor, R2 may be referred to as a second resistor, R3 may be referred to as a third resistor, and R4 may be referred to as a fourth resistor.

In the improved VRM provided in this application, the PWM controller may be integrated into one chip, the SPS/DrMOS is integrated into another chip, and the two chips are different. Alternatively, the PWM controller, the SPS/DrMOS, and the foregoing peripheral circuit (such as L, C, C1, and R1 - R4) may be integrated into a same chip.

In general, the improved VRM provided in this application may include a PWM controller, one or more SPSs/DrMOSs, and a peripheral connection relationship between the PWM controller and the one or more SPSs/DrMOSs. For a function of each module in the VRM, reference may be made to the foregoing descriptions. For the peripheral connection relationship between the PWM controller and the one or more SPSs/DrMOSs, reference may be made to any one of the foregoing connection relationships in FIG. 4 and FIG. 6 - FIG. 8.

The improved VRM provided in this application may be a single-phase VRM, or may be a multi-phase VRM.

The improved VRM provided in this application is configured to convert a larger direct-current voltage (for example, 12 V) output by a power supply in an electronic device into a stable smaller direct-current voltage (for example, 0.5 V - 2 V), and output the stable smaller direct-current voltage to a next-stage load such as a CPU, a GPU, or an ASIC. In addition, the VRM can further reduce additional power consumption on a VCC pin of an SPS/DrMOS when the next-stage load of the VRM is not working.

This application discloses a printed circuit board (Printed Circuit Board, PCB), and the PCB may include any one of the improved VRMs described above.

This application discloses a chip system, and the chip system may include any one of the improved VRMs described above.

This application discloses a power supply system, and the power supply system may include: a power supply, any one of the improved VRMs described above, and a load. The power supply is configured to provide a direct-current input voltage for the VRM, and the VRM is configured to: reduce the direct-current input voltage provided by the power supply, and output the reduced direct-current input voltage to the load.

This application discloses a power supply circuit, and the power supply circuit may include a power supply and any one of the improved VRMs described above. The power supply is configured to provide a direct-current input voltage for the VRM, and the VRM is configured to: reduce the direct-current input voltage provided by the power supply, and output the reduced direct-current input voltage.

This application discloses a power supply circuit, and the power supply circuit may include any one of the improved VRMs described above and a load. The VRM is configured to: reduce a received direct-current input voltage, and output the reduced direct-current input voltage to the load.

This application discloses an electronic device, and the electronic device may include any one of the improved VRMs described above.

This application discloses an electronic device, and the electronic device may include the power supply system provided above.

This application discloses an electronic device, and the electronic device may include any one of the power supply circuits provided above.

In the electronic device provided in this application, when a next-stage load of a VRM is working, an application processor (application processor, AP) (such as a CPU) or a controller (such as an embedded controller (embedded controller, EC)) in the electronic device may input a logic high level into an EN pin of a PWM controller through a GPIO, and when the next-stage load of the VRM is not working, the AP or the controller may input a logic low level into the EN pin of the PWM controller through the GPIO.

The electronic device disclosed in this application may be a mobile phone, a tablet computer, a desktop computer, a desktop computer with a touch-sensitive surface or a touch panel, a laptop computer (laptop), a notebook computer, a smart screen, a wearable device (such as a smartwatch or a smart band), an augmented reality (augmented reality, AR) device, a virtual reality (virtual reality, VR) device, an artificial intelligence (artificial intelligence, AI) device, an in-vehicle infotainment, a smart headset, a game console, an internet of things (internet of things, IOT) device, or a smart household device.

Referring to FIG. 10, FIG. 10 is a schematic diagram of a hardware structure of an electronic device 100 according to an embodiment of this application. The electronic device 100 is used for the voltage regulating method provided in the embodiments of this application.

As shown in FIG. 10, the electronic device 100 may include a power supply 1001, a power management module 1002, a processor 1003, and a memory 1004.

The power supply 1001 may be a battery, and the battery may be charged in a wired or wireless manner. Alternatively, the power supply management module 1002 may supply power to each module in the electronic device.

The power management module 1002 is connected to the power supply 1001 and the processor 1003. The power management module 1002 receives a power supply voltage that is output by the power supply 1001, and supplies power to the processor 1003 and another module. The power management module 1002 may be further configured to monitor parameters such as a battery capacity, a quantity of battery cycles, and a battery health status (leakage or impedance). In some other embodiments, the power management module 1002 may alternatively be disposed in the processor 1003.

The processor 1003 may include one or more processing units. For example, the processor 1003 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The memory 1004 may be configured to store computer-executable program code, and the executable program code may include instructions. The processor 1003 runs the instructions stored in the memory 1004, to perform various function applications and data processing of the electronic device 100. The memory 1004 may include a program storage region and a data storage region. In specific implementation, the memory 1004 may include a high-speed random access memory, and may also include a nonvolatile memory, for example, one or more magnetic disk storage devices, a flash memory device, or another nonvolatile solid-state storage device.

The power management module 1002 in this application includes the improved VRM provided above. As shown in FIG. 10, the power management module 1002 includes a VRM that supplies power to a GPU in the processor 1003. A high-voltage input terminal of the VRM is connected to a high-voltage output terminal of the power supply 1001, and a low-voltage input terminal of the VRM is connected to a low-voltage output terminal of the power supply 1001 and is grounded. A high-voltage output terminal of the VRM is connected to a high-voltage input terminal of the GPU, and a low-voltage output terminal of the VRM is connected to a low-voltage input terminal of the GPU and is grounded. For a structure of the VRM, reference may be made to the structure of any one of the VRMs in FIG. 4 and FIG. 6 - FIG. 8.

Another module other than the GPU in the electronic device 100, for example, a load module such as an AP or an ASIC, may be configured with a corresponding VRM in the power management module 1002, and is configured to: reduce a power supply voltage output by the power supply 1001 to a core voltage required by the load module, and provide the core voltage for the corresponding load module.

As shown in FIG. 10, the electronic device 100 may further include a wireless communication module 1005, a mobile communication module 1006, an antenna 1005A, an antenna 1006A, a sensor module 1008, a focusing motor 1009, a camera 1010, a display 1011, and the like. The sensor module 1008 may include a gyroscope sensor 1008A, an acceleration sensor 1008B, an ambient light sensor 1008C, an image sensor 1008D, a distance sensor 1008E, and the like. The wireless communication module 1005 may include a WLAN communication module, a Bluetooth communication module, and the like. Each part of the electronic device may transmit data by using a bus.

A wireless communication function of the electronic device 100 may be implemented by using the antenna 1005A, the antenna 1006A, the mobile communication module 1006, the wireless communication module 1005, the modem processor, the baseband processor, and the like.

The antenna 1005A and the antenna 1006A may be configured to transmit and receive an electromagnetic wave signal. Each antenna in the electronic device 100 may be configured to cover a single communication frequency band or a plurality of communication frequency bands. Different antennas may also be multiplexed to increase antenna utilization.

The mobile communication module 1006 may provide a solution applied to the electronic device 100 for wireless communication such as 2G/3G/4G/5G. The mobile communication module 1006 may include at least one filter, a switch, a power amplifier, a low noise amplifier (low noise amplifier, LNA), and the like. The mobile communication module 1006 may receive an electromagnetic wave through the antenna 1006A, perform processing such as filtering or amplification on the received electromagnetic wave, and transmit the electromagnetic wave to the modem processor for demodulation. The mobile communication module 1006 may further amplify a signal modulated by the modem processor, and convert the signal into an electromagnetic wave for radiation through the antenna 1006A.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transferred to the application processor. The application processor outputs a sound signal through an audio device, or displays an image or a video through the display 1011.

The wireless communication module 1005 may provide a solution applied to the electronic device 100 for wireless communication including a wireless local area network (wireless local area networks, WLAN), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 1005 may be one or more components integrated with at least one communication processing module. The wireless communication module 1005 receives an electromagnetic wave through the antenna 1005A, performs frequency modulation and filtering processing on an electromagnetic wave signal, and sends a processed signal to the processor 1003. The wireless communication module 1005 may further receive a to-be-sent signal from the processor 1003, perform frequency modulation and amplification on the signal, and convert the signal into an electromagnetic wave for radiation through the antenna 1005A.

The gyroscope sensor 1008A may be configured to determine a motion posture of the electronic device 100. In some embodiments, angular velocities of the electronic device 100 around three axes (namely, an x axis, a y axis, and a z axis) may be determined by using the gyroscope sensor 1008A The gyroscope sensor 1008A may be used for image stabilization during photographing. For example, when a shutter is pressed, the gyroscope sensor 1008A detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 1008A may be further used in a navigation scenario and a motion sensing game scenario.

The acceleration sensor 1008B may detect magnitudes of acceleration in various directions (usually on three axes) of the electronic device 100, and may detect a magnitude and a direction of gravity when the electronic device 100 is still. The acceleration sensor may be further configured to recognize a posture of the electronic device, and the acceleration sensor 1008B may be applied to applications such as landscape/portrait mode switching and a pedometer.

The ambient light sensor 1008C is configured to sense brightness of ambient light. The electronic device 100 may adaptively adjust brightness of the display 1011 based on the sensed ambient light brightness of the ambient light. The ambient light sensor 1008C may also be configured to automatically adjust white balance during photographing.

The image sensor 1008D is also referred to as a photosensitive element, and may convert a light image on a photosensitive surface into an electrical signal in a corresponding proportional relationship with the light image by using an optical-to-electrical conversion function of a photoelectric component. The image sensor may be a charge coupled device (charge coupled device, CCD) sensor or a complementary metal-oxide-semiconductor (complementary metal-oxide-semiconductor, CMOS) sensor.

The distance sensor 1008E may be configured to measure a distance. The electronic device 100 may measure a distance by using infrared or laser. In some shooting scenes, the electronic device 100 may measure a distance by using the distance sensor 1008E, to implement fast focusing.

The focusing motor 1009 may be configured to rapidly perform focusing. The electronic device 100 may control movement of a lens by using the focusing motor 1009, to implement automatic focusing.

The electronic device 100 may implement a shooting function through the ISP, the camera 1010, the video codec, the GPU, the display 1011, the application processor, and the like.

The ISP is configured to process data fed back by the camera 1010. For example, during shooting, a shutter is opened, and light is transferred to a photosensitive element of the camera through the lens. An optical signal is converted into an electrical signal. The photosensitive element of the camera transfers the electrical signal to the ISP for processing, to convert the electrical signal into an image visible to naked eyes. The ISP may further perform algorithm optimization on noise and brightness of the image. The ISP may further optimize parameters such as exposure and color temperature of a shooting scene. In some embodiments, the ISP may be disposed in the camera 1010.

The camera 1010 is configured to capture a still image or a video. An optical image of an object is generated through the lens and is projected onto the image sensor. The image sensor may convert an optical signal into an electrical signal, and then transfers the electrical signal to the ISP to convert the electrical signal into a digital image signal. The ISP may output the digital image signal to the DSP for processing. The DSP converts the digital image signal into an image signal in a standard format, for example, RGB or YUV. In some embodiments, the electronic device 100 may include 1 or N processors 1010, where N is a positive integer greater than 1.

The video codec is configured to compress or decompress a digital image. The electronic device 100 may support one or more image codecs. In this way, the electronic device 100 opens or saves images or videos in various coding formats.

The electronic device 100 may implement a display function by using the GPU, the display 1011, the application processor, and the like. The GPU is a microprocessor for image processing and connects the display 1011 and the application processor. The GPU is configured to perform mathematical and geometric computing for graphics rendering. The processor 1003 may include one or more GPUs that execute program instructions to generate or change display information.

The display 1011 is configured to display an image, a video, and the like. The display 1011 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flex light-emitting diode (flex light-emitting diode, FLED), a Miniled, a MicroLed, a Micro-oLed, a quantum dot light-emitting diode (quantum dot light-emitting diodes, QLEDs), or the like. In some embodiments, the electronic device 100 may include 1 or N displays 1011, where N is a positive integer greater than 1.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

This application further provides a voltage regulating method, and the voltage regulating method is applied to the improved VRM provided in this application. In this method, when an operation of enabling a next-stage load of the VRM is detected, a logic high level is input into an EN pin of a PWM controller, so that an SPS/DrMOS works normally, and when an operation of disabling the next-stage load of the VRM is detected, a logic low level is input into the EN pin of the PWM controller, so that the SPS/DrMOS enters a standby mode, thereby reducing a quiescent current on a VCC pin and reducing additional power consumption on the VCC pin.

With reference to the voltage regulating method, in some implementations, after inputting a logic high level into the EN pin of the PWM controller, an electronic device may further obtain a voltage requirement of the load, and adjust, based on the voltage requirement of the load, a duty cycle of a PWM voltage signal that is output by the PWM controller to a second circuit. For example, if the voltage requirement of the load increases, the duty cycle is increased, or otherwise, the duty cycle is decreased.

With reference to the voltage regulating method, in some implementations, the electronic device may further obtain a current requirement of a load, and adjust a quantity of enabled first circuits in N first circuits of the voltage regulator circuit based on the current requirement of the load. For example, if the current requirement of the load increases, the quantity of enabled first circuits is increased, or otherwise, the quantity of enabled first circuits is decreased.

The various implementations of this application may be arbitrarily combined to achieve different technical effects.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (such as a coaxial cable, an optical fiber, or a digital subscriber line) or a wireless manner (such as infrared, wireless, or microwave). The computer-readable storage medium may be any usable medium accessible by the computer, or a data storage device, such as a server or a data center, integrating one or more usable media. The available medium may be a magnetic medium (such as a floppy disk, a hard disk, or a magnetic tape), an optical medium (such as a DVD), a semiconductor medium (such as a solid state disk (solid state disk, SSD)), or the like.

In descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

Terms "first" and "second" are used merely for the purpose of description, and shall not be construed as indicating or implying relative importance or implying a quantity of indicated technical features. Therefore, features defined with "first" and "second" may explicitly or implicitly include one or more features. In the descriptions of the embodiments of this application, unless otherwise stated, "a plurality of" means two or more.

In conclusion, the foregoing descriptions are merely embodiments of the technical solutions of this application, and are not intended to limit the protection scope of this application. Any modification, equivalent replacement, and improvement made in accordance with the disclosure of this application shall be included in the protection scope of this application.

## Claims

1. A voltage regulator circuit, comprising a pulse-width modulation PWM controller and N first circuits, wherein N is a positive integer, and
the first circuit comprises a unidirectional conduction apparatus and a second circuit, wherein
the PWM controller is configured to output a PWM voltage signal to the second circuit, and the second circuit is configured to: reduce, based on the PWM voltage signal, a voltage received by a high-voltage input terminal of the voltage regulator circuit, and output the reduced voltage;
the PWM controller comprises an EN pin, the EN pin of the PWM controller is connected to an input terminal of an enable signal of the PWM controller, the second circuit comprises a DrMOS, the DrMOS comprises a SYNC pin and a VCC pin, the VCC pin is connected to an input terminal of a drive voltage of the DrMOS, and the SYNC pin is not connected to the input terminal of the drive voltage of the DrMOS;
a first terminal of a pull-up resistor module is connected to the VCC pin, and a second terminal is connected to the SYNC pin; a first terminal of a pull-down resistor module is connected to the SYNC pin, and a second terminal is grounded; the pull-up resistor module comprises a first resistor and/or a third resistor, and the pull-down resistor module comprises a second resistor and/or a fourth resistor; both a first terminal of the first resistor and a first terminal of the third resistor are connected to the VCC pin, and both a second terminal of the first resistor and a second terminal of the third resistor are connected to the SYNC pin; both a first terminal of the second resistor and a first terminal of the fourth resistor are connected to the SYNC pin, and both a second terminal of the second resistor and a second terminal of the fourth resistor are grounded; the first resistor and the second resistor belong to the voltage regulator circuit and are located on a periphery of the PWM controller and the second circuit; and the third resistor and the fourth resistor belong to the DrMOS; and
a first terminal of the unidirectional conduction apparatus is connected to the EN pin of the PWM controller, and a second terminal is connected to the SYNC pin.

2. The voltage regulator circuit according to claim 1, wherein
a quiescent current existing on the VCC pin when the SYNC pin is at an intermediate-state level is less than a quiescent current existing on the VCC pin when the SYNC pin is at a logic high level;
when the EN pin of the PWM controller receives a logic high level, the unidirectional conduction apparatus is turned on from the first terminal to the second terminal, and the SYNC pin receives a high level; and
when the EN pin of the PWM controller receives a logic low level, the unidirectional conduction apparatus is cut off from the first terminal to the second terminal, and the SYNC pin receives an intermediate-state level.

3. The voltage regulator circuit according to claim 1 or 2, wherein the voltage regulator circuit further comprises a first capacitor, a first terminal of the first capacitor is connected to the SYNC pin, and a second terminal of the first capacitor is grounded.

4. The voltage regulator circuit according to claim 3, wherein the first capacitor is located on the periphery of the PWM controller and the second circuit.

5. The voltage regulator circuit according to any one of claims 1-4, wherein the unidirectional conduction apparatus is a diode, an anode of the diode is connected to the EN pin of the PWM controller, and a cathode of the diode is connected to the SYNC pin.

6. The voltage regulator circuit according to any one of claims 1-5, wherein the DrMOS comprises a driver, a first switching transistor, and a second switching transistor, wherein
for the first switching transistor, a drain is connected to the high-voltage input terminal of the voltage regulator circuit, a gate is connected to a first output terminal of the driver, and a source is connected to an output terminal of the DrMOS;
for the second switching transistor, a drain is connected to the output terminal of the DrMOS, a gate is connected to a second output terminal of the driver, and a source is grounded; and
an input terminal of the driver is connected to an output terminal of the PWM controller.

7. The voltage regulator circuit according to claim 6, wherein
when the PWM voltage signal is on a positive half-cycle, the first output terminal of the driver outputs a first drive signal, the first switching transistor is turned on, and the second switching transistor is cut off; and
when the PWM voltage signal is on a negative half-cycle, the second output terminal of the driver outputs a second drive signal, the first switching transistor is cut off, and the second switching transistor is turned on.

8. The voltage regulator circuit according to claim 6 or 7, wherein the second circuit further comprises a first inductor and a second capacitor, wherein
a first terminal of the first inductor is connected to the output terminal of the DrMOS, both a second terminal of the first inductor and a first terminal of the second capacitor are connected to a high-voltage output terminal of the voltage regulator circuit, and a second terminal of the second capacitor is grounded.

9. The voltage regulator circuit according to any one of claims 1-8, wherein the high-voltage input terminal of the voltage regulator circuit is connected to a high-voltage output terminal of a power supply.

10. The voltage regulator circuit according to any one of claims 1-9, wherein the high-voltage output terminal of the voltage regulator circuit is connected to a high-voltage input terminal of a load.

11. The voltage regulator circuit according to claim 10, wherein a current that is output from the high-voltage output terminal of the voltage regulator circuit to the load is a sum of output currents of enabled first circuits in the N first circuits.

12. The voltage regulator circuit according to any one of claims 1-11, wherein the voltage regulator circuit is connected to the load, and the load comprises any one of the following: a CPU, a GPU, and an ASIC.

13. The voltage regulator circuit according to any one of claims 1-12, wherein the input terminal of the enable signal of the PWM controller is a GPIO interface.

14. The voltage regulator circuit according to any one of claims 1-13, wherein the PWM controller is integrated in a first chip, the DrMOS is integrated in a second chip, and the first chip and the second chip are different.

15. An electronic device, wherein the electronic device comprises the voltage regulator circuit according to any one of claims 1-14.

16. A chip, wherein the chip comprises the voltage regulator circuit according to any one of claims 1-13.

17. A voltage regulating method, wherein the method is applied to an electronic device, the electronic device is the electronic device according to claim 12, the electronic device comprises a load, the load is connected to the voltage regulator circuit, and the method comprises:
detecting, by the electronic device, an operation of enabling the load;
inputting, by the electronic device, a logic high level into the EN pin of the PWM controller;
detecting, by the electronic device, an operation of disabling the load; and
inputting, by the electronic device, a logic low level into the EN pin of the PWM controller.

18. The method according to claim 17, wherein the electronic device inputs a logic high level or a logic low level into the EN pin of the PWM controller through a GPIO interface.

19. The method according to claim 17 or 18, wherein after the inputting, by the electronic device, a logic high level into the EN pin of the PWM controller, the method further comprises:
obtaining, by the electronic device, a voltage requirement of the load; and
adjusting, by the electronic device based on the voltage requirement of the load, a duty cycle of the PWM voltage signal that is output by the PWM controller to the second circuit.

20. The method according to any one of claims 17-19, wherein the method further comprises:
obtaining, by the electronic device, a current requirement of the load; and
adjusting, by the electronic device, a quantity of enabled first circuits in the N first circuits of the voltage regulator circuit based on the current requirement of the load.
